# EUROPEAN PATENT APPLICATION

(11) **EP 1 544 184 A1**
(43) Date of publication of application: **22.06.2005**
(21) Application number: 03771329.4
(22) Date of filing: 25.07.2003
(51) Int. Cl.: C04B 35/573

(54) **SILICON CARBIDE THERMOSTABLE POROUS STRUCTURAL MATERIAL AND PROCESS FOR PRODUCING THE SAME**

(30) Priority: 26.07.2002 JP 2002218247
(71) Applicant: National Institute of Advanced Industrial Science and Technology, Tokyo 100-8921 (JP)
(72) Inventor: TANI, Eiji, Nat. Inst. of Adv. In. Science & Tech., Tosu-shi, Saga 841-0052 (JP)
(74) Representative: Findlay, Alice Rosemary
(86) International application number: PCT/JP2003/009434
(87) International publication number: WO 2004/011388

(57) **Abstract**

After a slurry containing powdered silicon and a resin used as a carbon source is applied by impregnation to a carbon powder-made porous structural body having a bone structure, which is formed from powdered carbon, and is then carbonized at 900 to 1,300°C in a vacuum or an inert gas atmosphere, reaction sintering is performed at a temperature of 1,300°C or more in a vacuum or an inert gas atmosphere. Accordingly, since a carbonized porous structural body can be obtained which has open pores generated by a volume-reduction reaction at the same time when porous silicon carbide having a good wettability to molten silicon is formed, this carbonized porous structural body is impregnated with molten silicon at a temperature of 1,300 to 1,800°C in a vacuum or an inert gas atmosphere.

## Description

### Technical Field

The present invention relates to silicon carbide-based heat-resistance porous structural materials and manufacturing methods thereof, each material formed using a carbon powder-made porous structural body by two-stage reaction sintering performed in combination of reaction sintering between silicon and carbon and melt impregnation of silicon or simply by melt impregnation of silicon, the carbon powder-made porous structural body having a honeycomb shape or the like and being formed from powdered carbon. In more particular, the present invention relates to a silicon carbide-based heat-resistance porous structural material and a manufacturing method thereof, the structural material being used in many applications such as a high temperature structural member, a heat exchanger, a high temperature catalyst carrier, a high temperature filter, a filter medium for molten metal, and a furnace member.

### Background Art

Since being light weight and having superior heat resistance, abrasion resistance, corrosion resistance, and the like, in recent years, a silicon carbide-based ceramic has been widely used in various fields, such as a high-temperature and corrosion resistant member, a heater material, a heat exchanger, and an abrasion resistant member, and has also been further used as abrasives, grinding stones, and the like. Since this silicon carbide is primarily manufactured by a sintering technique, a sintering auxiliary agent is required, and since being used in the form of a dense bulk material, as of today, the silicon carbide has not been practically used as a filter having a complicated shape and a light-weight porous structural material having a honeycomb shape or the like.

Although a silicon carbide-based ceramic having a honeycomb shape has been formed by extrusion molding, there have been problems in that a molding machine and a mold thereof are expensive and that the shape is determined by the mold.
In addition, since an auxiliary agent is used, the heat resistance is inferior, and large dimensional shrinkage occurs by sintering.

In addition, a method for forming a silicon carbide-based ceramic having a honeycomb shape has been disclosed in Japanese Unexamined Patent Application Publication No. 2001-226174 in which a paper-made corrugated fiberboard is impregnated with a slurry containing a resin and powdered silicon and is then carbonized, followed by reaction sintering and melt impregnation of silicon; however, since the paper-made corrugated fiberboard has a dimensional shrinkage of 10% to 20% in firing, and the surface thereof does not become a flat surface but it undulates. Furthermore, since a remaining carbon amount of the paper is approximately only 10 percent by weight of the weight of the corrugated fiberboard, and a carbon yield obtained from the resin is also up to 60 percent by weight, the amount of carbon is small, and hence the amount of silicon carbide to be obtained by reaction with silicon is also small, thereby causing a problem in that the strength thereof is not high as a structural material. In addition, since the paper-made corrugated fiberboard is formed from waste paper as a starting material, calcium carbonate and oxides such as titanium oxide are contained in an amount of approximately 10 percent by weight of the weight of the corrugated fiberboard, and the oxides mentioned above serve as impurities and degrade heat resistance properties of the ceramic used as a structural material.

Through research on a fiber-reinforced silicon carbide composite material, the inventor of the present invention found that reaction of forming silicon carbide, which reaction is between powdered silicon and carbon obtained from a resin, occurs while causing a decrease in volume, and that adhesion to a fiber is superior (Japanese Patent No. 2045825). In addition, it was also found that when a porous material such as a corrugated fiberboard or sponge is impregnated with a slurry formed of a phenol resin and powdered silicon and is then processed by reaction sintering, followed by melt impregnation of silicon, a silicon carbide-based heat-resistance, light-weight, porous structural material can be manufactured in which bone portions are dense and have a small specific surface area (Japanese Unexamined Patent Application Publication No. 2001-226174).

Based on the findings described above, the present invention provides a silicon carbide-based heat-resistance porous structural material formed by an inexpensive process and a manufacturing method thereof, in which various shortcomings of a conventional silicon carbide-based porous structural material and a manufacturing method thereof are overcome, the shape of an as-molded porous structural body having a bone structure can be maintained without substantial shrinkage, the bone structure is dense and strong, and a product can be easily formed therefrom even when it has a complicated shape.

That is, through intensive research carried out by the inventor of the present invention on the silicon carbide-based heat-resistance, light-weight, porous structural material, the following were confirmed. That is, when a mixed slurry formed of powdered silicon and a resin is applied by impregnation to a bone structure of a carbon powder-made porous structural body, such as a corrugated fiberboard shape, followed by firing in a vacuum or an inert gas atmosphere, a strength maintaining the shape is obtained even after carbonization performed at 1,000°C, the dimensional shrinkage is very small, such as approximately 3%, and at a temperature of 1,300°C or more, by reaction forming silicon carbide between the powdered silicon and carbon obtained from the resin, which causes the decrease in volume, porous silicon carbide can be formed on the surface.

In addition, it was found that, in melt impregnation of silicon at a melting point of silicon or more, this porous silicon carbide has a good wettability to molten silicon and is likely to react therewith and also with the carbon powder-made porous structural body present inside so as to form dense silicon carbide; hence, the present invention was finally made. Furthermore, it was also confirmed that when a resin slurry is applied by impregnation to a carbon powder-made porous structural body having a bone structure and is then carbonized, followed by melt impregnation of silicon, dense silicon carbide can be formed.

### Disclosure of Invention

A first silicon carbide-based heat-resistance porous structural material of the present invention, which is formed based on the description described above, is produced by a process comprising the step of impregnating a carbonized porous structural body with molten silicon, the structural body having open pores open to a surface thereof which are generated due to a volume-reduction reaction and at the same time containing porous silicon carbide which has a good wettability to molten silicon. In addition, the carbonized porous structural body is formed by the steps of applying a slurry by impregnation to a carbon powder-made porous structural body having a bone structure, which is formed from powdered carbon, and then carbonizing the slurry, followed by reaction sintering, the slurry containing powdered silicon and a resin used as a carbon source.

In addition, a second silicon carbide-based heat-resistance porous structural material of the present invention is produced by a process comprising the step of impregnating a carbonized porous structural body with molten silicon, the structural body having carbon on a surface thereof generated from a resin by carbonization so as to maintain the original shape after carbonization and at the same time containing powdered carbon having a good wettability to molten silicon. In addition, the carbonized porous structural body is formed by the steps of applying a slurry by impregnation to a carbon powder-made porous structural body having a bone structure, which is formed from powdered carbon, and then carbonizing the slurry.

As the carbon powder-made porous structural body having a bone structure, in general, a carbon product having a honeycomb, a corrugated fiberboard, or a cardboard shape is used which is formed by adding a binding agent to the powdered carbon, followed by molding.

In more particular, the silicon carbide-based heat-resistance porous structural material of the present invention is formed by the steps of covering the carbon powder-made porous structural body having a bone structure with a resin so as to maintain the shape after carbonization, mixing powdered silicon into the resin whenever necessary, then forming silicon carbide having a good wettability to molten silicon by reaction sintering and open pores in surface portions of the bone structure resulting from a volume-reduction reaction, the silicon carbide being formed between powdered silicon and amorphous carbon obtained from the resin, and performing melt impregnation of silicon.

When the amorphous carbon obtained by carbonizing the resin is dense, molten silicon hardly reacts therewith. However, since the carbon powder-made porous structural body is composed of porous carbon which is reactive with molten silicon, without mixing powdered silicon with the resin for reaction sintering, when the amount of amorphous carbon obtained from the resin is small, melt impregnation of silicon can be performed. In addition, since the bone structure of the carbon powder-made porous structural body is formed of carbon, the shrinkage thereof after firing is hardly observed, and furthermore, since the bone structure is formed from carbon itself instead of paper having a low carbon yield, the amount of silicon carbide obtained by the reaction between carbon and silicon is large, thereby obtaining a high strength.

In addition, a method for manufacturing the above first silicon carbide-based heat-resistance porous structural material, of the present invention, comprises the steps of: applying a slurry containing powdered silicon and a resin used as a carbon source by impregnation to a carbon powder-made porous structural body having a bone structure, which is formed from powdered carbon, then carbonizing the slurry at 900 to 1,300°C in a vacuum or an inert gas atmosphere, then performing reaction sintering at a temperature of 1,300°C or more in a vacuum or an inert gas atmosphere so as to form a carbonized porous structural body having open pores which are generated by a volume-reduction reaction at the same time when porous silicon carbide having a good wettability to molten silicon is formed, and impregnating this carbonized porous structural body with silicon at a temperature of 1,300 to 1,800°C in a vacuum or an inert gas atmosphere.

Furthermore, a method for manufacturing the above second silicon carbide-based heat-resistance porous structural material, of the present invention, comprises the steps of: applying a slurry containing a resin used as a carbon source by impregnation to a carbon powder-made porous structural body having a bone structure, which is formed from powdered carbon, then carbonizing the slurry at 900 to 1,300°C in a vacuum or an inert gas atmosphere so as to form a carbonized porous structural body having carbon generated on a surface thereof from the resin and at the same time containing powdered carbon having a good wettability to molten silicon, and impregnating this carbonized porous structural body with silicon at a temperature of 1,300 to 1,800°C in a vacuum or an inert gas atmosphere.

According to the methods of the present invention as described above, a large structural body having a complicated shape can be easily formed, and when the porous structure body is machined after carbonization, machining can be easily performed since the porous structure body has a strength capable of withstanding the machining.

As the carbon powder-made porous structural body having a bone structure, used in the methods described above, a structural body capable of holding the slurry on the surface thereof is preferable, and in particular, a carbon product is suitably used which is formed by extrusion of powdered carbon added with a binding agent into a honeycomb shape or by paper making of powdered carbon added with a binding agent into a corrugated fiberboard or a cardboard shape.

In addition, as the resin used as a carbon source in the methods described above, which is applied by impregnation to the bone structure of the porous structural body, a phenol resin, a furan resin, a polycarboxysilane, an organic metal polymer, and pitch may be preferably mentioned. The resins mentioned above may be used alone or in combination.

Furthermore, as an additive added to the slurry with which the bone structure of the carbon powder-made porous structural body is impregnated, at least one selected from the group consisting of powdered carbon, powdered graphite, and carbon black may be added, and as an aggregate or an antioxidant, at least one selected from the group consisting of silicon carbide, silicon nitride, titania, zirconia, zircon, alumina, silica, mullite, molybdenum disilicide, boron carbide, boron, and powdered silicon may be added.

As the powdered silicon contained in the slurry or the silicon for melt impregnation, used in the methods described above, a silicon alloy containing at least one element selected from the group consisting of magnesium, aluminum, titanium, chromium, manganese, iron, cobalt, nickel, copper, zinc, zirconium, niobium, molybdenum, and tungsten, or a mixture of the above element and powdered silicon may be used.

According to the silicon carbide-based heat-resistance porous structural material of the present invention and the manufacturing method thereof, a silicon carbide-based heat-resistance, light-weight, porous composite material can be easily formed while the original shape of a porous structural body is maintained, and in addition, since a complicated shape can also be easily formed, the composite material described above can be used in wide and various applications such as a high temperature filter, a high temperature structural member, a heat insulating material, a filter medium for molten metal, a burner plate, a heater material, and a high temperature sound absorber.

### Best Mode for Carrying Out the Invention

Next, preferable embodiments of the methods according to the present invention will be described.

When a first silicon carbide-based heat-resistance porous structural material of the present invention is manufactured, a slurry, which is formed by mixing a dissolved phenol resin used as a carbon source and powdered silicon, is sufficiently applied to a carbon powder-made porous structural body having a bone structure, or a carbon powder-made porous structural body is immersed in the slurry described above for impregnation, and subsequently, drying is performed.

In addition, when a second silicon carbide-based heat-resistance porous structural material is manufactured, a slurry containing a phenol resin or the like used as a carbon source is sufficiently applied to a carbon powder-made porous structural body having a bone structure by impregnation as is the case described above, followed by drying.

The drying in both cases described above is desirably performed at approximately 70°C for about 12 hours.

As the above carbon powder-made porous structural body having a bone structure, as described above, a carbon product which is formed by extrusion of powdered carbon added with a binding agent into a honeycomb shape or by paper making of powdered carbon added with a binding agent into a corrugated fiberboard or a cardboard shape may be used as it is or may be formed into an optional shape using an adhesive or the like for the use.

In addition, as the resin with which the bone structure of the porous structural body is impregnated, at least one of a resin selected from the group consisting of a phenol resin, a furan resin, a polycarboxysilane, an organic metal polymer, and pitch may be used, and whenever necessary, the above additive and the like may also be added.

Furthermore, as the powdered silicon used for forming silicon carbide, a fine powder is suitably used, and in particular, a fine powder having an average particle size of 30 µm or less is suitably used. A powder having a larger particle diameter may be formed into a fine powder by pulverization using a ball mill or the like.

Next, the carbon powder-made porous structural body thus formed is carbonized in a vacuum or an inert gas atmosphere at a temperature of approximately 900 to 1,300°C. When powdered silicon is added to the slurry for forming the first silicon carbide-based heat-resistance porous structural material, a carbonized porous structural body obtained thereby has a bone portion made of powdered carbon and a mixed portion present on the surface of the carbon powder-made bone portion so as to cover it, the mixed portion being composed of the powdered silicon and amorphous carbon formed by carbonization of the phenol resin.

Subsequently, in both cases in which the first and the second porous structural materials are manufactured, the shape of the bone structure is not deformed or shrunk, and the original shape thereof can be substantially maintained. In addition, the carbonized porous structural body has a strength capable of withstanding machining.

When powdered silicon is added to the slurry described above, this carbonized porous structural body is processed by firing treatment in a vacuum or an inert gas atmosphere at a temperature of approximately 1,300 to 1,420°C after carbonization so that amorphous carbon obtained from the phenol resin and the silicon are allowed to react with each other, thereby forming porous silicon carbide on the bone structure. Accordingly, at the same time when porous silicon carbide having a good wettability to molten silicon is formed, since this reaction is a volume-reduction reaction, open pores open to the surface are formed by this volume-reduction reaction. As a result, a porous structural body made of silicon carbide having pores can be obtained.

Next, this carbonized porous structural body is impregnated with molten silicon in a vacuum or an inert gas atmosphere at a temperature of 1,300 to 1,800°C, thereby obtaining the silicon carbide-based heat-resistance porous structural material of the present invention.

In addition, the ratio of the powdered silicon to the resin used in the above method of the present invention is preferably set so that the ratio Si/C of silicon to carbon on an atomic basis is in the range of 0 to 5.

As described above, without mixing powdered silicon with the resin of the slurry for reaction sintering, when the amount of amorphous carbon obtained from the resin is small, melt impregnation of silicon after carbonization can be performed. The second porous structural material described above corresponds to the case described above, and melt impregnation of silicon is performed for a carbonized porous structural body which has carbon generated from the resin on the surface thereof and at the same time contains powdered carbon having a good wettability to molten silicon. Hence, when a slurry containing a resin used as a carbon source is applied by impregnation to a carbon powder-made porous structural body having a bone structure, followed by carbonization, the carbonized porous structural body is formed which has carbon generated from the resin on the surface thereof and at the same time contains powdered carbon having a good wettability to molten silicon, and this carbonized porous structural body is then impregnated with molten silicon. The other manufacturing conditions are the same as those described above.

### Examples

Next, the methods of the present invention will be further described in detail with reference to examples; however, the present invention is not limited thereto at all.

### [EXAMPLE 1]

A mixing ratio of a phenol resin to powdered silicon was set so that the ratio of carbon formed from the phenol resin by carbonization to silicon on an atomic basis was 2 to 3, a slurry was prepared by dissolving the phenol resin in ethyl alcohol and was mixed using a ball mill for one day in order to decrease diameters of particles of the powdered silicon, and an air conditioner filter having a laminated corrugated fiberboard shape made of powdered activated carbon was impregnated with the slurry thus prepared, followed by drying.

Next, this air conditioner filter was carbonized by firing in an argon atmosphere at 1,000°C for one hour. The carbon-based porous body thus formed had a strength capable of sufficiently withstanding machining, and the shrinkage thereof was very small, such as approximately 3%. By the use of this carbon-based porous body, reaction sintering and melt impregnation of silicon were performed at 1,450°C for one hour in a vacuum atmosphere, thereby obtaining a silicon carbide-based heat-resistance porous composite material having a corrugated fiberboard shape.

The silicon carbide-based heat-resistance porous structural material thus formed had the same structure as that of the corrugated fiberboard used as a starting material, the dimensions after carbonization were not changed therefrom, and the surface was also flat. In addition, silicon carbide-made bones had a large thickness and high strength as compared to those obtained using a paper-made corrugated fiberboard.

### [EXAMPLE 2]

A slurry was prepared by dissolving a phenol resin in ethyl alcohol, and an air conditioner filter is impregnated with the slurry, followed by drying, the filter having a laminated corrugated fiberboard shape made of powdered active carbon. Next, this air conditioner filter was carbonized by firing in an argon atmosphere at 1,000°C for one hour. The carbon-based porous body thus formed had a strength capable of sufficiently withstanding machining, and the shrinkage thereof was very small, such as approximately 3%. This carbon-based porous body was processed by melt impregnation of silicon at 1,450°C for one hour in a vacuum atmosphere, thereby obtaining a silicon carbide-based heat-resistance porous composite material having a corrugated fiberboard shape.

The silicon carbide-based heat-resistance porous structural material thus formed had the same structure as that of the corrugated fiberboard used as a starting material, the dimensions after carbonization were not changed therefrom, and the surface was also flat. In addition, silicon carbide-made bones had a large thickness and high strength as compared to those of a paper-made corrugated fiberboard.

### [Comparative Example 1]

An air conditioner filter having a laminated corrugated fiberboard shape made of powdered active carbon was carbonized by firing in an argon atmosphere at 1,000°C for one hour. The carbon-based porous body thus formed was changed into powder when being touched with hands, and hence the shape of the porous body cannot be maintained.

## Claims

1. A silicon carbide-based heat-resistance porous structural material produced by a process comprising the step of:
impregnating a carbonized porous structural body with molten silicon, the structural body having open pores open to a surface thereof, which are generated due to a volume-reduction reaction, and at the same time containing porous silicon carbide having a good wettability to molten silicon,
wherein the carbonized porous structural body is formed by the steps of applying a slurry by impregnation to a carbon powder-made porous structural body having a bone structure, which is formed from powdered carbon, carbonizing the slurry, and then performing reaction sintering, the slurry containing powdered silicon and a resin used as a carbon source.

2. A silicon carbide-based heat-resistance porous structural material produced by a process comprising the step of:
impregnating a carbonized porous structural body with molten silicon, the structural body having carbon on a surface thereof generated from a resin and at the same time containing powdered carbon having a good wettability to molten silicon,
wherein the carbonized porous structural body is formed by the steps of applying a slurry by impregnation to a carbon powder-made porous structural body having a bone structure, which is formed from powdered carbon, and then carbonizing the slurry.

3. The silicon carbide-based heat-resistance porous structural material according to Claim 1 or 2, wherein, as the carbon powder-made porous structural body having a bone structure, a carbon product having a honeycomb, a corrugated fiberboard, or a cardboard shape is used which is formed by adding a binding agent to the powdered carbon, followed by molding.

4. A method for manufacturing a silicon carbide-based heat-resistance porous structural material, comprising the steps of:
applying a slurry containing powdered silicon and a resin used as a carbon source by impregnation to a carbon powder-made porous structural body having a bone structure, which is formed from powdered carbon, then carbonizing the slurry at 900 to 1,300°C in a vacuum or an inert gas atmosphere, then performing reaction sintering at a temperature of 1,300°C or more in a vacuum or an inert gas atmosphere so as to form a carbonized porous structural body having open pores which are generated by a volume-reduction reaction at the same time when porous silicon carbide having a good wettability to molten silicon is formed, and impregnating this carbonized porous structural body with silicon at a temperature of 1,300 to 1,800°C in a vacuum or an inert gas atmosphere.

5. A method for manufacturing a silicon carbide-based heat-resistance porous structural material, comprising the steps of:
applying a slurry containing a resin used as a carbon source by impregnation to a carbon powder-made porous structural body having a bone structure, which is formed from powdered carbon, then carbonizing the slurry at 900 to 1,300°C in a vacuum or an inert gas atmosphere so as to form a carbonized porous structural body having carbon generated on a surface thereof from the resin and at the same time containing powdered carbon having a good wettability to molten silicon, and
impregnating this carbonized porous structural body with silicon at a temperature of 1,300 to 1,800°C in a vacuum or an inert gas atmosphere.

6. The method for manufacturing a silicon carbide-based heat-resistance porous structural material, according to Claim 4 or 5, wherein, as the carbon powder-made porous structural body having a bone structure, a carbon product is used which is formed by extrusion of powdered carbon added with a binding agent into a honeycomb shape or by paper making of powdered carbon added with a binding agent into a corrugated fiberboard or a cardboard shape.

7. The method for manufacturing a silicon carbide-based heat-resistance porous structural material, according to Claim 4 or 5, wherein, as the resin applied by impregnation to the bone structure of the carbon powder-made porous structural body, at least one selected from the group consisting of a phenol resin, a furan resin, a polycarboxysilane, an organic metal polymer, and pitch is used.

8. The method for manufacturing a silicon carbide-based heat-resistance porous structural material, according to Claim 4 or 5, wherein, as an additive added to the slurry with which the bone structure of the carbon powder-made porous structural body is impregnated, at least one selected from the group consisting of powdered carbon, powdered graphite, and carbon black is used.

9. The method for manufacturing a silicon carbide-based heat-resistance porous structural material, according to Claim 4 or 5, wherein, as an aggregate or an antioxidant added to the slurry with which the bone structure of the carbon powder-made porous structural body is impregnated, at least one selected from the group consisting of silicon carbide, silicon nitride, titania, zirconia, zircon, alumina, silica, mullite, molybdenum disilicide, boron carbide, boron, and powdered silicon is used.

10. The method for manufacturing a silicon carbide-based heat-resistance porous structural material, according to Claim 4 or 5, wherein, as the powdered silicon contained in the slurry or the silicon used for melt impregnation, a silicon alloy containing at least one element selected from the group consisting of magnesium, aluminum, titanium, chromium, manganese, iron, cobalt, nickel, copper, zinc, zirconium, niobium, molybdenum, and tungsten, or a mixture of the above element and powdered silicon is used.

11. The method for manufacturing a silicon carbide-based heat-resistance porous structural material, according to Claim 4 or 5, wherein, as the resin of the slurry applied by impregnation to the bone structure of the carbon powder-made porous structural body, at least one selected from the group consisting of a phenol resin, a furan resin, a polycarboxysilane, an organic metal polymer, and pitch is used, and as an additive added to the slurry, at least one selected from the group consisting of powdered carbon, powdered graphite, and carbon black is used.

12. The method for manufacturing a silicon carbide-based heat-resistance porous structural material, according to Claim 4 or 5, wherein, as an aggregate or an antioxidant added to the slurry applied by impregnation to the bone structure of the carbon powder-made porous structural body, at least one selected from the group consisting of silicon carbide, silicon nitride, titania, zirconia, zircon, alumina, silica, mullite, molybdenum disilicide, boron carbide, boron, and powdered silicon is used, and as the powdered silicon contained in the slurry or the silicon used for melt impregnation, a silicon alloy containing at least one element selected from the group consisting of magnesium, aluminum, titanium, chromium, manganese, iron, cobalt, nickel, copper, zinc, zirconium, niobium, molybdenum, and tungsten, or a mixture of the above element and powdered silicon is used.
